# EUROPEAN PATENT SPECIFICATION

(11) **EP 2 781 537 B1**
(45) Date of publication and mention of the grant of the patent: **18.05.2016**
(21) Application number: 12848849.1
(22) Date of filing: 19.11.2012
(51) Int. Cl.: C08J 3/20, C08K 3/00, C08L 101/00

(54) **THERMOPLASTIC RESIN COMPOSITION AND MOLDED ARTICLE COMPOSED THEREOF**
THERMOPLASTISCHE HARZZUSAMMENSETZUNG UND FORMARTIKEL DARAUS
COMPOSITION DE RÉSINE THERMOPLASTIQUE ET ARTICLE MOULÉ COMPOSÉ DE CELLE-CI

(30) Priority: 17.11.2011 JP 2011251200; 14.06.2012 JP 2012135091
(43) Date of publication of application: 24.09.2014
(73) Proprietor: SANC SALAAM CORPORATION, Osaka-shi, Osaka 535-0031 (JP)
(72) Inventor: MIZUKAMI, Yoshikatsu, Osaka-shi Osaka 535-0031 (JP); IWASA, Eiji, Osaka-shi Osaka 530-8611 (JP)
(74) Representative: Agasse, Stéphane
(86) International application number: PCT/JP2012/007422
(87) International publication number: WO 2013/073198

(56) References cited:
- EP-A1- 1 914 274
- EP-A1- 2 243 804
- WO-A1-2007/010787
- WO-A1-2009/104423
- JP-A- 2011 524 936
- US-A1- 2008 001 116
- RYOTA TAMATE ET AL.: 'Structural Rheology of Microphase Separated Diblock Copolymers' JOURNAL OF PHYSICAL SOCIETY OF JAPAN vol. 77, no. 3, 15 March 2008, pages 034802.1 - 034802.6, XP055149973

## Description

### TECHNICAL FIELD

The present invention is directed to extrusion molded products, injection molded products, or blow molded products such as resin films, resin sheets, and resin fibers in which nanoparticles are macroscopically uniformly dispersed.

### BACKGROUND ART

Examples of nano fine particles include colloidal silica, colloidal platinum, and colloidal gold widely used as fiber finishing agents, starting materials for cosmetics, and medical markers, respectively. However, it is difficult to directly and uniformly disperse the colloid nanoparticles in resin. Patent Document 1 describes a method for producing metal oxide fine particles. In this method, an organic dispersion medium solution of metal alkoxide and an acid or aqueous alkaline solution are added to and mixed with a solution of macromolecular reverse micelles obtained by dissolving amphiphilic block polymers in an organic dispersion medium to prevent aggregation of nanoparticles in resin, hydrolysates of the metal alkoxide are taken into aqueous phases in the macromolecular reverse micelles, and thereafter, the macromolecular reverse micelles containing the hydrolysates are heated to remove water from the hydrolysates, thereby obtaining fine particles of metal oxide. However, this production method includes the increased number of steps compared to a production method in which the colloid nanoparticles are directly and uniformly dispersed, and thus is economically disadvantageous. Moreover, the disadvantage of this production method is that the surfaces of the nanoparticles are covered, and thus the functions of the nanoparticles are inhibited.

Patent Document 2 describes a method for producing a nanoparticle dispersion resin composition. In this method, colloidal silica is dried and is then dispersed in and polymerized with an acrylic monomer. However, this method cannot be used when gas phase polymerization is caused as in the case of polyolefin such as polyethylene and polypropylene.

### CITATION LIST

### PATENT DOCUMENT

PATENT DOCUMENT 1: Japanese Unexamined Patent Publication No. 2004-161795
PATENT DOCUMENT 2: Japanese Unexamined Patent Publication No. 2010-208920

### NON-PATENT DOCUMENT

NON-PATENT DOCUMENT 1: "Structural Rheology of Microphase Separated Diblock Copolymers" J. Phys. Soc. Jpn. Vol. 77, No. 3, 2008, p. 034802

### SUMMARY OF THE INVENTION

### TECHNICAL PROBLEM

It is an object of the present invention to provide a resin composition obtained by directly and uniformly dispersing colloid nanoparticles, such as colloidal silica, colloidal platinum, and colloidal gold widely used as fiber finishing agents, starting materials for cosmetics, and medical markers, respectively, in resin, and a molded product formed thereof in low cost.

### SOLUTION TO THE PROBLEM

One form of the present invention provides a thermoplastic resin composition, and a molded product formed thereof, wherein the thermoplastic resin composition is produced by a method X for producing a resin mixture which includes a thermoplastic base polymer or base polyblend (A), a thermoplastic base polymer or base polyblend (B) phase-separated from (A), and fluid (C) included as a nanoparticle colloid having compatibility with neither (A) nor (B) and containing nanoparticles uniformly dispersed at a temperature lower than or equal to the thermal decomposition temperature of (A) or (B), and in which interfaces between three layers made of (A), (B), and (C) form three-dimensional continuous parallel interfaces (e.g., a minimal surface structure such as a gyroid structure), and the nanoparticles obtained by removing a dispersion medium of the fluid (C) in the resin mixture by evaporation and having an average particle size from 1 µm to 1 nm are locally unevenly distributed in the pattern of a curve or a straight line connecting consecutive points at a fracture surface of the thermoplastic resin composition, and are macroscopically uniformly dispersed.

Another form of the present invention provides a thermoplastic resin composition, and a molded product thereof, wherein the thermoplastic resin composition is produced by a method Y for producing a resin mixture by blending a thermoplastic base polymer or base polyblend (A), a block copolymer (BC) including a block (B1) having compatibility with (A) and a block (B2) having no compatibility with (A), and fluid (C) included as a nanoparticle colloid in which nanoparticles are uniformly dispersed at a temperature lower than or equal to the thermal decomposition temperature of (A) or (BC) together, and the nanoparticles obtained by removing a dispersion medium of the fluid (C) in the resin mixture by evaporation have an average particle size from 1 µm to 1 nm, are locally unevenly distributed in the pattern of a curve or a straight line connecting consecutive points at a fracture surface of the thermoplastic resin composition, and are macroscopically uniformly dispersed.

A thermoplastic resin composition of the invention includes: a plurality of kinds of thermoplastic resins; and nanoparticles having an average particle size larger than or equal to 1 nm and smaller than or equal to 1 µm, wherein the nanoparticles are in a membrane-like space sandwiched by the thermoplastic resins on both sides of the membrane-like space, and the thermoplastic resin composition has an interconnected structure in which both surfaces of the membrane-like space extend three-dimensionally and continuously parallel to each other. The term "interconnected structure" as used herein refers to, as described in Non-Patent Document 1, a structure in which two spaces separated by a layer are infinitely connected to each other. This structure is an internal structure of a thermoplastic resin composition, and thus the structure in which two spaces are infinitely connected to each other is of course broken at a fracture surface and a cross section of the thermoplastic resin composition.

The thermoplastic resins may be a thermoplastic base polymer or base polyblend (A), and a thermoplastic base polymer or base polyblend (B) having no compatibility with (A), and (A) and (B) have an interconnected structure formed by an interface therebetween. The description that "(A) and (B) has an interconnected structure formed by interfaces therebetween" means that two spaces separated by an interface are infinitely connected to each other.

In a molten state, a volume of (A) is preferably greater than or equal to 95% and less than or equal to 105% of a volume of (B).

The thermoplastic resins may be a thermoplastic base polymer or base polyblend (A), and a block copolymer (BC) including a block (B1) having compatibility with (A) and a block (B2) having no compatibility with (A).

The block copolymer (BC) preferably includes a polyolefin block as the block (B1) and a polystyrene block as the block (B2) and is at least one selected from a polystyrene-poly(ethylene/propylene) block copolymer, a polystyrene-poly(ethylene/butylene) block copolymer, a polystyrene-poly(ethylene/propylene)-polystyrene block copolymer, a polystyrene-poly(ethylene/butylene)-polystyrene block copolymer, and a polystyrene-poly(ethylene-ethylene/propylene)-polystyrene block copolymer.

The nanoparticles may include at least one of metal, metal oxide, ceramic, or an organic substance.

The organic substance may be zinc pyrithione, persimmon tannin, or tea extractable matter.

A resin molded product of the present invention is formed of the thermoplastic resin composition, or a mixture of the thermoplastic resin composition and the thermoplastic resins or another thermoplastic resin. The resin molded product may be any one of an extrusion molded product, an injection molded product, or a blow molded product.

A method for producing a thermoplastic resin composition of the present invention includes: kneading a thermoplastic base polymer or base polyblend (A), a thermoplastic base polymer or base polyblend (B) having no compatibility with (A), and fluid (C) included as a nanoparticle colloid having compatibility with neither (A) nor (B) and containing nanoparticles uniformly dispersed at a temperature lower than or equal to a thermal decomposition temperature of (A) or (B) and having an average particle size larger than or equal to 1 nm and smaller than or equal to 1 µm; and removing a dispersion medium of the fluid (C) by evaporation, wherein the nanoparticles are in a membrane-like space sandwiched between (A) and (B) on both sides of the membrane-like space, the thermoplastic resin composition has an interconnected structure formed by both surfaces of the membrane-like space which extend three-dimensionally and continuously parallel to each other, and (A) and (B) have an interconnected structure formed by an interface therebetween.

In a molten state, a volume of (A) is preferably greater than or equal to 95% and less than or equal to 105% of a volume of (B).

Another method for producing a thermoplastic resin composition of the present invention includes: kneading a thermoplastic base polymer or base polyblend (A), a block copolymer (BC) composed of a block (B1) having compatibility with (A) and a block (B2) having no compatibility with (A), and fluid (C) included as a nanoparticle colloid containing nanoparticles uniformly dispersed at a temperature lower than or equal to a thermal decomposition temperature of (A) or (BC); and removing a dispersion medium of the fluid (C) by evaporation, wherein the nanoparticles are in a membrane-like space sandwiched between (A) and (B) on both sides of the membrane-like space, and the thermoplastic resin composition has an interconnected structure formed by both surfaces of the membrane-like space which extend three-dimensionally and continuously parallel to each other.

### (C) may be a water colloid.

Another method for producing a thermoplastic resin composition of the present invention includes: kneading a thermoplastic base polymer or base polyblend (A), a block copolymer (BC) including a block (B1) having compatibility with (A) and a block (B2) having no compatibility with (A), and fluid (C) included as a nanoparticle colloid containing nanoparticles uniformly dispersed at a temperature lower than or equal to a thermal decomposition temperature of (A) or (BC); and removing a dispersion medium of the fluid (C) by evaporation, wherein in the kneading, the nanoparticles are in a membrane-like space made of colloid sandwiched between (A) on both sides of the membrane-like space. The thermoplastic resin composition preferably has a configuration having an interconnected structure formed by both surfaces of the membrane-like space which extend three-dimensionally and continuously parallel to each other.

### ADVANTAGES OF THE INVENTION

Since nanoparticles of the thermoplastic resin composition of the present invention are macroscopically uniformly dispersed, the thermoplastic resin composition can be used as a starting material for an extrusion molded product, an injection molded product, or a blow molded product such as a film, a sheet, and a fiber. Moreover, the thermoplastic resin composition can impart the functions of the nanoparticles to the molded product. Since the nanocolloid is directly used, it is possible to provide the resin composition at low costs.

### DESCRIPTION OF EMBODIMENTS

One form of the present invention provides a thermoplastic resin composition containing a plurality of kinds of thermoplastic resins and nanoparticles having an average particle size larger than or equal to 1 nm and smaller than or equal to 1 µm, wherein the nanoparticles are in a membrane-like space sandwiched between the thermoplastic resins on both sides of the a membrane-like space, and both surfaces of the membrane-like space three-dimensionally and continuously extend parallel to each other, thereby forming an interconnected structure. Two spaces partitioned by the membrane-like space are preferably occupied with different kinds of thermoplastic resins, or each space may be occupied with a mixture of two or more kinds of thermoplastic resins. The description that nanoparticles are in the membrane-like space means, as described later, that a colloid containing nanoparticles forms a membrane, and then a dispersion medium of the colloid is removed, so that only the nanoparticles remain.

One form of the present invention provides a thermoplastic resin composition, and a molded product formed thereof, wherein the thermoplastic resin composition is produced by a method X for producing a resin mixture. The resin mixture includes a thermoplastic base polymer or base polyblend (A), a thermoplastic base polymer or base polyblend (B) phase-separated from (A), and fluid (C) included as a nanoparticle colloid having compatibility with neither (A) nor (B) and containing nanoparticles uniformly dispersed at a temperature lower than or equal to the thermal decomposition temperature of (A) or (B). In the resin mixture, interfaces between three layers made of (A), (B), and (C) form three-dimensional continuous parallel interfaces (e.g., a minimal surface structure such as a gyroid structure, see Non-Patent Document 1). The nanoparticles obtained by removing a dispersion medium of the fluid (C) in the resin mixture by evaporation and having an average particle size from 1 µm to 1 nm are locally unevenly distributed in the pattern of a curve or a straight line connecting consecutive points at a fracture surface of the thermoplastic resin composition, and are macroscopically uniformly dispersed. The description "the interfaces between the three layers made of (A), (B), and (C) form three-dimensional continuous parallel interfaces" means that both surfaces of the layers made of (A), (B), and (C) are parallel to each other, and the layers made of (A), (B), and (C) are stacked on one another and three-dimensionally continuously extend, where the layer made of (A) includes a large number of layers made of (A), the layer made of (B) includes a large number of layers made of (B), and the layer made of (C) includes a large number of layers made of (C).

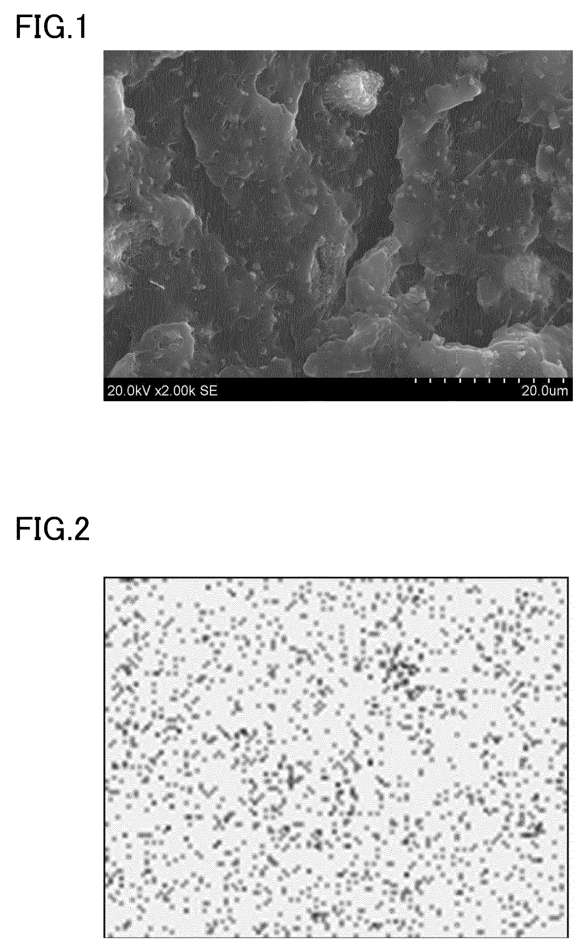

The description "the nanoparticles are locally unevenly distributed in the pattern of a curve or a straight line connecting consecutive points at a fracture surface" herein refers to, as illustrated in FIGS. 2, 4, and 6, a particle dispersion state observed by a microscope such as a SEM, and means that the nanoparticles are in the membrane-like space. Moreover, the description "macroscopically uniform" means a state in which the nanoparticles are uniform to such an extent that no problem arises in the quality and in operation in production steps of molded products such as fibers and are uniform to obtain good products without spots. Specifically, in production of a multifilament, the description "macroscopically uniform" generally means a substantially uniform particle dispersion state in which nanoparticles pass through a filter of 400 or more meshes. In the extrusion molding and the injection molding, the description "macroscopically uniform" means a substantially uniform particle dispersion state in which nanoparticles pass through a filter of 100 or more meshes.

Another form of the present invention provides a thermoplastic resin composition, and a molded product thereof, wherein the thermoplastic resin composition is produced by a method Y for producing a resin mixture. The resin mixture is obtained by blending a thermoplastic base polymer or base polyblend (A), a block copolymer (BC) including a block (B1) having compatibility with (A) and a block (B2) having no compatibility with (A), and fluid (C) included as a nanoparticle colloid containing nanoparticles uniformly dispersed at a temperature lower than or equal to the thermal decomposition temperature of (A) or (BC) together. The nanoparticles obtained by removing a dispersion medium of the fluid (C) in the resin mixture by evaporation have an average particle size from 1 µm to 1 nm, are locally unevenly distributed in the pattern of a curve or a straight line connecting consecutive points at a fracture surface of the thermoplastic resin composition, and are macroscopically uniformly dispersed. In this case, neither the base polymer nor the base polyblend (B) is used.

Although the production methods X and Y are different from each other, the production methods X and Y results in the production of a resin composition in which nanoparticles of the present invention having an average particle size from 1 µm to 1 nm are locally unevenly distributed in the pattern of a curve or a straight line connecting consecutive points at the fracture surface.

The block copolymer (BC) of the thermoplastic resin composition includes a polyolefin block as the block (B1) and a polystyrene block as the block (B2) and is at least one kind of block copolymer selected from a polystyrene-poly(ethylene/propylene) block copolymer, a polystyrene-poly(ethylene/butylene) block copolymer, a polystyrene-poly(ethylene/propylene)-polystyrene block copolymer, a polystyrene-poly(ethylene/butylene)-polystyrene block copolymer, and a polystyrene-poly(ethylene-ethylene/propylene)-polystyrene block copolymer.

In the thermoplastic resin composition and the molded product formed thereof according to the above-described forms of the present invention, the component (C) is at least one selected from an inorganic colloid such as colloidal silica, colloidal titanium oxide, colloidal bentonites, colloidal platinum, colloidal gold, colloidal silver, and colloidal zinc, and an organic colloid such as colloidal zinc pyrithione, a persimmon tannin solution, and a tea extract.

In the thermoplastic resin composition and the molded product formed thereof according to the above-described forms of the present invention, (C) is a water colloid.

One form of the present invention provides a molded product which is formed of the thermoplastic resin composition (D) of the present invention, or in which the thermoplastic resin composition (D) is diluted and dispersed.

In the above-described form of the present invention, the molded product is an extrusion molded product, an injection molded product, or a blow molded product such as a film, a sheet, and a fiber which is formed of the thermoplastic resin composition (D) of the present invention, or in which the thermoplastic resin composition (D) is diluted and dispersed.

(A) used in the present invention and (B) phase-separated from (A) are thermoplastic precursors of a thermoplastic polymer or a thermosetting polymer. (A) and (B) do not undergo a significant reaction in a molten state to an extent which impairs formation of three-dimensional continuous parallel interfaces. Examples of the thermoplastic polymer include thermoplastic fluoropolymers such as polydifluoroethylene and the like, polyethylenes such as HDPE, LDPE, LLDPE and the like, addition polymers such as polypropylene, polyisoprene, polybutene, polystyrene, polymethacrylate, modified forms thereof and the like, polyesters such as PET, PBT, PTT, PLA and the like, polyamides such as nylon 6, nylon 66, nylon 12 and the like, condensation polymers such as polycarbonate, polyurethane and the like, and the like. Examples of the thermoplastic precursor for a thermosetting polymer include a mixture of an unsaturated polyester resin precursor or a phenol resin precursor (novolac) and hexamine, a resin obtained by partially curing the mixture by heating, and the like. The thermoplastic precursor of the thermosetting resin is molded before curing, and provides excellent heat resistance and dimensional stability.

The term "(A) and (B) do not have compatibility with each other" as used in the production method X of the present invention means that (A) and (B) are not mixed with each other at a state of molecule even after mixing them in the molten sate by mechanical shearing, and (A) and (B) form layers, and therefore, (A) and (B) are phase-separated, and an interface is formed between (A) and (B). Therefore, (A) and (B) may be the same PEs, or (A) and (B) may be phase-separated in a layered pattern, e.g., a combination of an HDPE and an LDPE may be available. (A) and (B) may also be the same PPs, or one of (A) and (B) may be modified.

As a combination of (A) and (B) among them, polyolefins which are phase-separated from each other, or an addition polymer such as a polyolefin or the like and a condensation polymer such as a polyester or the like, can be used. However, it should be previously confirmed that, when two polyesters having different compositions, or a polyester and a polyamide, are used as (A) and (B), (A) and (B) do not significantly react each other in the molten state, and therefore, the three-dimensional continuous parallel interface structure is not disrupted and the inherent properties of the base polymer are not impaired. For the three-dimensional continuous parallel interface structure, it is preferable that the volume ratio of the base polymer (A) and the polymer (B) which does not have compatibility with the base polymer (A) in the molten state be close to 50:50, and the difference in volume ratio between (A) and (B) be 5% or less.

The block copolymer (BC) used in the present invention is a block copolymer (BC) including the block (B1) having compatibility with (A) and a block (B2) having no compatibility with (A), wherein the block copolymer (BC) includes, for example, a polyolefin block as the block (B1) and a polystyrene block as the block (B2), and is at least one kind of block copolymer selected from a polystyrene-poly(ethylene/propylene) block copolymer, a polystyrene-poly(ethylene/butylene) block copolymer, a polystyrene-poly(ethylene/propylene)-polystyrene block copolymer, a polystyrene-poly(ethylene/butylene)-polystyrene block copolymer, and a polystyrene-poly(ethylene-ethylene/propylene)-polystyrene block copolymer.

Commercially available products of the block copolymer are, for example, "Septon™" manufactured by Kuraray Co. Ltd. and "Tufprene™" manufactured by Asahi Kasei Chemicals Corporation.

The volume ratio of (C) is 1/3 or less of the total thermoplastic resin composition of the present invention. The nanoparticles in (C) except the dispersion medium of (C) preferably have a high concentration as long as the dispersion state is stable.

Examples of (C) include colloidal metal such as colloidal platinum, colloidal gold, colloidal silver, colloidal zinc, and colloidal copper, and an inorganic colloid such as colloidal metal salt, for example, colloidal silica, colloidal titanium oxide, and colloidal cuprous oxide. Colloidal silica is commercially available from Nissan Chemical Industries, Ltd. as aqueous dispersion type Snowtex XST™ in which 20 W% of particles have an average particle size of 4-6 nm, Snowtex S™ in which 30 W% of particles have an average particle size of 8-11 nm, and Snowtex 40™ in which 40 W% of particles have an average particle size of 10-20 nm. Colloidal silica is used as a heat resistant binder, a coating vehicle, a catalyst carrier, a metal surface treatment agent, or a fiber finishing agent, and imparts functionalities to the thermoplastic resin composition and the molded product of the present invention. The particle size is preferably larger than or equal to 10 nm in production steps, and is preferably smaller than or equal to 500 nm in terms of macroscopic uniformity. The particle size is preferably smaller than or equal to 50 nm in terms of transparency of products.

Examples of (C) include tea catechins including modified forms such as theaflavin, thearubigin, and catechin gallate, tea extracts and others, a colloid of polyphenol such as tannin having antioxidant and deodorizing effects, a bactericidal chitosan colloid, and products commercially available from Arch Chemical such as Zinc Omadine™ in which 48 W% of zinc pyrithione is dispersed in water and 90% of zinc pyrithione particles have a particle size smaller than or equal to 1 µm, and an organic colloid such as Copper Omadine™.

The blending amount of (C) varies depending on the demands of final products. In the case of Zinc Omadine™ having an antifungal property, using Zinc Omadine™ for socks at a blending amount of 0.5 W% of an active ingredient produces products having an antifungal property with excellent washing durability.

A surfactant is generally blended into (C) to improve the dispersion stability of nanoparticles. Examples of the surfactant include an anionic surfactant such as soap, a sulfate ester salt, sulfonate, a phosphate ester salt, a cationic surfactant such as an amine salt and a quaternary ammonium salt, an amphoteric surfactant of amino acid type, betaine type, etc., and a surfactant of polyethylene glycol type, polyalcohol type, etc. The kinds and the amount of the surfactants are selected so that no adverse effect is exerted on molded products of the present invention and applications thereof. The quaternary ammonium salt such as benzalkonium chloride exhibits excellent bactericidal properties depending on the kind of surfactants, and imparts a secondary effect.

The nanoparticles having an average particle size from 1 µm to 1 nm and included in (C) in the production method X are in a three-dimensional continuous parallel interface structure formed by (C) between (A) and (B). After the dispersion medium of (C) is removed by evaporation, the nanoparticles are distributed with the positional relationship between each other being maintained. Thus, the nanoparticles are linearly and locally unevenly distributed on a curve or a straight line connecting consecutive points at a composite resin fracture surface, and are macroscopically uniformly dispersed, thereby providing a resin composition of the present invention. The unevenly distributed nanoparticles are seen in the pattern of a continuous dotted line at the fracture surface, but the nanoparticles are planarly and unevenly distributed in three-dimensional view.

While (A) and (C) are kneaded to form layers in the production method Y, a low-molecular dispersion medium of (C) is transferred and taken into the block copolymer (BC), and the nanoparticles contained in (C) and having an average particle size from 1 µm to 1 nm are filtered and remain in a layered pattern, so that the nanoparticles are planarly and unevenly scattered. At a cross section, the nanoparticles locally distributed in the pattern of a continuous curve or a polyline are observed.

When the particle size of the nanoparticles contained in (C) and having an average particle size from 1 µm to 1 nm is smaller, (C) is more stable as a colloid, and the particle size is preferably smaller than or equal to 500 nm. When the particle size is smaller than or equal to 200 nm, more preferably smaller than or equal to 100 nm, nanoparticles no longer scatter visible light, so that a visually transparent resin composition of the present invention is obtained despite the fine particles included in (C). A stable colloid is more easily produced when the particle size is smaller, and thus the particle size is preferably smaller than or equal to 100 nm.

In the case of the production method X, a ultraviolet ray UV-A having a wavelength of 280-315 nm causes hydrogen abstraction reaction of an α methyl group, thereby producing radicals, which deteriorates polypropylene, polymethyl methacrylate, etc. having the α methyl group. When the diameter of the nanoparticles contained in the resin composition of the present invention is sufficiently smaller than the wavelength of the ultraviolet ray UV-A, and the nanoparticles are regularly distributed at a suitable density at a distance (DT) satisfying the Bragg condition, light having such a wavelength are diffracted despite small particles.

In the resin composition of the present invention, even nanoparticles sufficiently smaller than the wavelength of the ultraviolet ray UV-A efficiently scatter the ultraviolet ray when the nanoparticles are regularly distributed at the distance (DT) satisfying the Bragg condition. On the other hand, when the distance (DT) is smaller than the wavelength of light to be transmitted, the light is not diffracted, but is transmitted. When kneading is performed so that the distance (DT) is suitably maintained, the resin composition of the present invention can scatter the ultraviolet ray UV-A and transmit visible light.

The dispersion medium of (C) may be an organic dispersion medium, but the toxicity and the flammability of the organic dispersion medium has to be considered. Water, neither the toxicity nor the flammability of which needs to be considered, is therefore preferable from the viewpoint of handleability. In any of the production methods X and Y, it is surprising that stable operation is possible with as much as 10% of water being supplied generally in a polymer extrusion step.

For the production method X which imparts the three-dimensional continuous parallel interface structure, which is a characteristic feature of the embodiment, to a polymer, a kneader which provides large shear (e.g., a high speed twin-screw extruder) is used. When colloid (C) is blended in the liquid state, a side-injection extruder using a plunger pump is preferably used. As shear force is increased, the three-dimensional continuous parallel interfaces are formed finer. Therefore, it is preferable to increase the number of revolutions per minute of a screw under a temperature condition suited to the screw. The number of revolutions per minute of the screw is preferably 800 rpm or higher, more preferably 1,000 rpm or higher. The same applies to the kneading step in the production method Y.

The thickness of the three-dimensional continuous parallel interfaces can be reduced to several nanometers. A (C) layer sandwiched by the three-dimensional continuous parallel interfaces is formed. A pellet which is a thermoplastic resin composition of the present invention and is obtained by extrusion from a nozzle of a twin-screw extruder followed by cutting is accordingly dried by a common method, thereby removing the dispersion medium of (C) by transpiration. The nanoparticles are unevenly distributed in the (C) layer sandwiched between the three-dimensional continuous parallel interfaces without forming secondary aggregation. The thickness of the (C) layer sandwiched between the three-dimensional continuous parallel interfaces corresponds to the distance (DT) of the Bragg condition. On the other hand, for example, in an area such as the entire cross section of a fiber, the nanoparticles are macroscopically uniformly distributed.

The thermoplastic resin composition of the present invention may be used as a masterbatch or a compound as it is.

Molded products, such as extrusion-molded products, injection-molded products and the like (the films and fiber products and the like of the embodiment), are produced by a commonly used production method using the thermoplastic resin composition of the present invention as a masterbatch or a compound as it is.

The dispersed state of the particles in the composition of the present invention was observed by a SEM (S-3400N manufactured by Hitachi, Ltd.) at a fracture surface of a sample. In the case of an inorganic substance, metallic elements were dyed, and in the case of an organic substance, metal was dyed, and the metallic elements or the metal was observed in a map obtained by EPMA. This observation confirmed that the nanoparticles were unevenly distributed without forming secondary aggregation. The average particle size of the nanoparticles was measured by a light scattering method, a dynamic light scattering method, or SEM observation.

Further details will be described in examples, which are not intended to specifically limit the present invention. The ratio of a starting material to be added is shown in volume% normalized using the thermoplastic resin composition or resin molded product to be produced as one.

### EXAMPLES

### First Example (Zinc Pyrithione PP Masterbatch)

In the production method X, 40 V% of J226T which is a propylene random copolymer manufactured by Prime Polymer Co., Ltd. and having a MI value of 20 at a heating temperature of 230°C and with a load of 2.16 kg as a base polymer (A) and 40 V% of J108M which is a propylene homopolymer manufactured by Prime Polymer Co., Ltd. and having a MI value of 45 as a base polymer (B) were fed at constant feed rates from hoppers, and 20 V% of Zinc Omadine™ which is commercially available from Arch Chemical and in which 48 W% of zinc pyrithione is dispersed in water and 90% of zinc pyrithione particles have a particle size smaller than or equal to 1 µm as (C) was fed at a constant feed rate using a plunger pump, followed by extrusion into the shape of a strand at a screw rotational speed of 1,200 rpm of a high-speed rotation twin-screw kneading extruder, at a maximum temperature of 230°C, and at a die temperature of 200°C. The strand was quenched in a water bath at 20°C and was then cut, thereby obtaining a thermoplastic resin composition masterbatch pellet of the three-dimensional continuous parallel interface structure of the present invention.

The base polymer (A) and the base polymer (B) have no compatibility with each other. Therefore, when only the base polymer (A) and the base polymer (B) are melted and kneaded, the base polymer (A) and the base polymer (B) are completely separated into two phases if incubated without shearing. The water colloid (C) has compatibility neither with (A) nor with (B), and thus is completely phase-separated.

A surface of the pellet was glossy and had slight transparency although about 11 W% of fine particles were contained. A part of the pellet which was in contact with a blade of a cutter was smooth, but most parts of the pellet were fracture surfaces. A fracture surface at a cross section orthogonal to a pellet extrusion direction was observed by a SEM. It was thus found that as illustrated in FIG. 1, most of the nanoparticles had an average diameter of about 300 nm.

The fracture surface was enlarged to analyze the distribution of zinc. The result of the analysis is shown in FIG. 2. In a diameter range of several tens of µm or greater, i.e., practical size, the distribution of zinc can be macroscopically uniform. However, zinc particles were linearly and locally (in a diameter range of several micrometers) unevenly distributed on a curve or a straight line connecting consecutive points. Thus, the distribution of zinc exhibited the three-dimensional continuous parallel interface structure. Since the nanoparticles were linearly distributed, the nanoparticles were locally nonuniform on a curve or a straight line connecting consecutive points. Zinc was unevenly dispersed without forming secondary aggregation. The nanoparticles, which were not observed in FIG. 1, were observed in FIG. 2 because a reflected X-ray was used for the analysis, and thus the X-ray measurement depth is increased, so that the larger number of nanoparticles were observed than in the case where only the surface were observed.

### Second Example (antifungal Socks)

Five W% of the PP resin masterbatch of the present invention produced in the first example, 3 W% of PP masterbatch containing 20 W% of black pigment, and 92 W% of J108M which is a propylene homopolymer manufactured by Prime Polymer Co., Ltd. and having a MI value of 45 were dry-blended and spun by a common method, thereby obtaining multifilament false-twisted yarn (110 dTex/36F) of the present invention, and Spandex monofilament (30 dTex) was used together with the multifilament false-twisted yarn , thereby obtaining covering yarn containing Spandex at a mixing ratio of 10 W%. Double-knit socks of the present invention was fabricated by using 30 W% of the covering yarn as back side yarn and 70 W% of cotton yarn died black as face yarn in a common method.

The antifungal properties of the socks against Trichophyton and black mold were measured. It was thus found that against Trichophyton, the antifungal activity value was 3.3, and the antifungal activity value after 10 times of laundering was 3.2, and that against black mold, the antifungal activity value was 3.2, and the antifungal activity value after 10 times of laundering was 2.9. Thus, the socks exhibited excellent antifungal properties. The antifungal properties were measured by using an ATP emission measurement method of Japan Textile Evaluation Technology Council. Japan Textile Evaluation Technology Council approves the antifungal property of products when the antifungal activity value is greater than or equal to 2.0.

### Comparative Example 1 (Zinc Pyrithione PP Masterbatch)

A pellet was tried to be produced in a manner similar to that in the first example, where only the mixing ratio was changed such that J226T which is a propylene random copolymer manufactured by Prime Polymer Co., Ltd. as a base polymer (A) was 60 V%, and J108M which is a propylene homopolymer manufactured by Prime Polymer Co., Ltd. as a base polymer (B) was 20 V%. However, a colloid in which 48 W% of zinc pyrithione is dispersed in water flowed out from a nozzle of a twin-screw kneading extruder, so that operation was not possible, and no sample was collected.

### Third Example (Colloidal Silica Master PP Batch)

In the production method X, 38 V% of J106MJ which is a propylene homopolymer manufactured by Prime Polymer Co., Ltd. as a base polymer (A) and 40 V% of PMMA manufactured by Kuraray co., Ltd. and having a MI value of 15 as a base polymer (B) were fed at constant feed rates from hoppers, and 20 V% of Snowtex 40 manufactured by Nissan Chemical Industries, Ltd. as (C) was fed at a constant feed rate from a plunger pump, followed by extrusion into the shape of a strand at a screw rotational speed of 1,200 rpm of a high-speed rotation twin-screw kneading extruder, at a maximum temperature of 230°C, and at a die temperature of 230°C. The strand was quenched in a water bath at 20°C and was then cut, thereby obtaining a thermoplastic resin composition masterbatch pellet of the three-dimensional continuous parallel interface structure of the present invention. A surface of the pellet was glossy and had slight transparency although about 20 W% of inorganic fine particles were contained. There is almost no difference between the refractive index of PMMA and the refractive index of propylene homopolymer, and thus PMMA and propylene homopolymer are transparent even when blended.

The base polymer (A) and the base polymer (B) have no compatibility with each other. Therefore, when only the base polymer (A) and the base polymer (B) are melted and kneaded, the base polymer (A) and the base polymer (B) are completely separated into two phases if incubated without shearing. The water colloid (C) has compatibility with neither (A) nor (B), and thus is completely phase-separated.

In a manner similar to that in the first example, the fracture surface of the pellet was enlarged to analyze the distribution of silicon. Based on the result of the analysis, it can be said that in a diameter range of several tens of µm or greater, i.e., practical size, the distribution of silicon is macroscopically uniform. However, silicon particles were linearly and locally (in a diameter range of several micrometers) unevenly distributed on a curve or a straight line connecting consecutive points. Thus, the distribution of silicon exhibited the three-dimensional continuous parallel interface structure. Since the nanoparticles were linearly distributed, the nanoparticles were locally nonuniform on a curve or a straight line connecting consecutive points. Silicon was unevenly dispersed without forming secondary aggregation.

### Fourth Example (PMMA Sheet)

Two W%, 4 W%, and 6 W% of the PMMA masterbatch containing silica and produced in the third example were blended into a PMMA polymer to obtain mixtures, and the mixtures were passed through three wire filters of 80 meshes, 200 meshes, and 150 meshes stacked on one another, and were extruded from a T-die, thereby forming PMMA sheets each having a thickness of 2 mm and a width of 30 cm of the present invention. The dispersibility of the nanoparticles can be predicted by a haze measurement. The haze of the sheets of the present invention irradiated with visible light was less than or equal to 3%, and thus excellent transparency of PMMA was maintained.

On the other hand, the transmittance of UV-A having a wavelength of 300 nm was reduced to 62%, 88%, and 93% in the products respectively containing 2 W%, 4 W%, and 6 W% of the PMMA masterbatch, and thus excellent scattering property of the ultraviolet ray was exhibited.

### Fifth Example (Chitosan Colloid PP Masterbatch)

A thermoplastic resin composition masterbatch pellet of the three-dimensional continuous parallel interface structure of the present invention was obtained in a manner similar to that in the first example, where only (C) was changed to an water colloid containing 30 W% of 25 kDa, 90% saponified chitosan obtained by decomposing chitin of shrimps. A surface of the pellet was glossy and had slight transparency although about 6 W% of chitosan fine particles were contained.

Chitosan at a fracture surface of a cross section orthogonal to a pellet extrusion direction was dyed with Ca²⁺, and observed by a SEM. It was thus found that the average diameter of chitosan fine particles was about 80 nm. Next, the fracture surface was enlarged to analyze the distribution of Ca bonded to chitosan. Based on the result of the analysis, it can be said that in the diameter range of several tens of µm or greater, i.e., practical size, the distribution of Ca is macroscopically uniform. However, Ca particles were linearly and locally (in the diameter range of several micrometers) unevenly distributed on a curve or a straight line connecting consecutive points. Thus, the distribution of Ca exhibited the three-dimensional continuous parallel interface structure.

### Sixth Example (Chitosan PP Antibacterial Injection Molded Product)

Ten W % of the chitosan PP masterbatch produced in the fifth example and 90 W% of a propylene homopolymer manufactured by Japan Polypropylene Corporation and having a MI value of 30 were dry-blended to obtain a mixture, and the obtained mixture was injection molded by a common method, thereby molding a test plate of the present invention. The antibacterial activity of the test plate against Staphylococcus aureus was measured according to Japanese Industrial Standard (JIS) Z 1982. It is thus found that the antibacterial activity value was 2.8, and thus the test plate exhibited excellent an antibacterial property.

### Seventh Example (Cuprous Oxide Colloid PE/PP Masterbatch)

A resin composition masterbatch pellet of the three-dimensional continuous parallel interface structure of the present invention was obtained in a manner similar to that in the first example except that 40 V% of Novatec HY540™ which is HDPE and has a MI value of 1 as (B) was fed at a constant feed rate from a hopper, and (C) was changed to a water colloid containing 25 W% of cuprous oxide which has an average particle size of 80 nm and are produced based on the first example of Japanese Patent Publication No. 2005-15628. A surface of the pellet was glossy and had slight transparency although about 5 W% of cuprous oxide fine particles were contained.

Also in the present example, the base polymer (A) and the base polymer (B) have no compatibility with each other. Therefore, when only the base polymer (A) and the base polymer (B) are melted and kneaded, the base polymer (A) and the base polymer (B) are completely separated into two phases if incubated without shearing. The water colloid (C) has compatibility with neither (A) nor (B), and thus is completely phase-separated.

In a manner similar to that in the first example, a fracture surface of the pellet was enlarged to analyze the distribution of copper. Based on the result of the analysis, it can be said that in a diameter range of several tens of µm or greater, i.e., practical size, the distribution of copper is macroscopically uniform. However, copper particles were linearly and locally (in the diameter range of several micrometers) unevenly distributed on a curve or a straight line connecting consecutive points. Thus, the distribution of copper exhibited the three-dimensional continuous parallel interface structure. Since the nanoparticles are linearly distributed, the nanoparticles were locally nonuniform on a curve or a straight line connecting consecutive points. Copper particles were unevenly dispersed without forming secondary aggregation.

### Eighth Example (PE Rope)

Ten W % of the PE/PP masterbatch of the present invention produced in the seventh example and 90 W% of Novatec HY540™ which is HDPE were dry-blended and melt-spun by a common method, thereby obtaining a thread in which five monofilaments (each 1100 dTex) of the present invention are aligned, and then yarn was produced by plying 20 threads, thereby obtaining a fishing rope of the present invention.

The rope having a length of 2 m was immersed with a weight in the sea at a quay in Kurashiki in early April, and was observed every month for four months for comparison with a comparative product which is a common blank rope containing no cuprous oxide in terms of marine organism adhesion. Adhesion of barnacles to the blank rope was observed after one month, and the blank rope was not able to be seen after two months due to marine organisms. Adhesion of marine algae and barnacles to the rope of the present invention was not observed after four months, and thus the rope of the present invention exhibited an excellent property of preventing marine organism adhesion (anti-fouling property).

### Ninth Example (Zinc Pyrithione PP Masterbatch)

In the production method Y, 60 W% of J108M which is polypropylene manufactured by Prime Polymer Co., Ltd. and has a MI value of 45 at a heating temperature 230°C and with a load of 2.16 kg as a base polymer (A) and 20 W% of "Septon 2002™" manufactured by Kuraray co., Ltd. as a block copolymer (BC) were fed at constant rates from hoppers, and 20 W% of Zinc Omadine™ which is an antibacterial and antifungal agent manufactured by Arch Chemical and in which 48 W% of zinc pyrithione is dispersed in water and 90% of zinc pyrithione particles have a particle size smaller than or equal to 1 µm as (C) was fed by side-injection at a constant feed rate, followed by extrusion into the shape of a strand at a screw rotational speed of 1,000 rpm of a high-speed rotation twin-screw kneading extruder, at a maximum temperature of 200°C, and at a die temperature of 190°C. The strand was quenched in a water bath at 20°C and was then cut, thereby obtaining a resin composition masterbatch pellet of the present invention. Although 10 W% of water relative to the total weight was blended, little water vapor was transpired from the strand extruded from the nozzle, and water was retained in the strand. It was assumed that most of the blended water was quasi-stably transferred into and encapsulated in the block copolymer (BC).

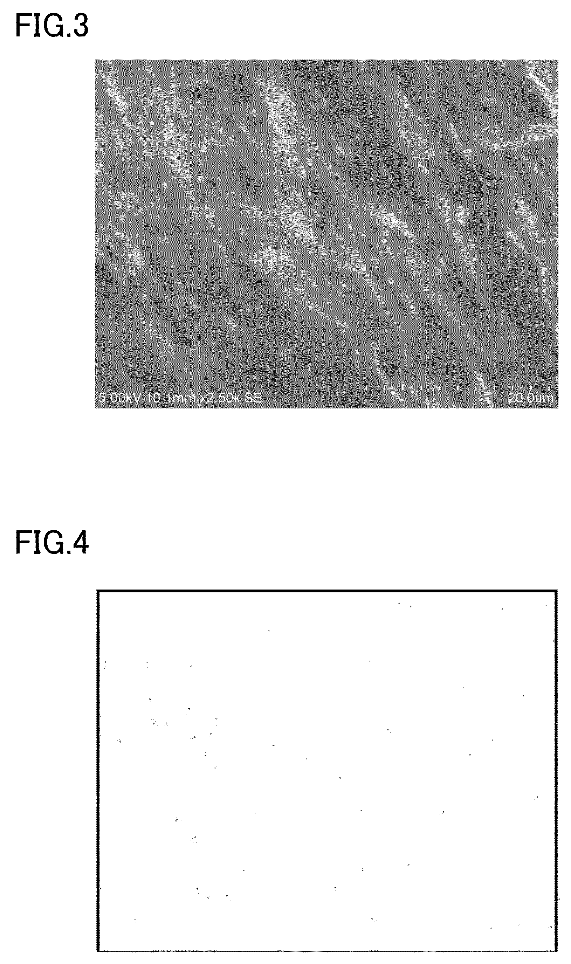

A region of a fracture surface of the pellet was observed by a SEM (FIG. 3), and Zn in the region of FIG. 3 was mapped by EPMA (FIG. 4). It was thus found that Zinc Omadine™ had an average particle size smaller than or equal to 1 µm. Without forming secondary aggregation, the particles were locally (in the diameter range smaller than or equal to several micrometers, hereinafter "locally" refers to this diameter range) unevenly dispersed on a curve or a straight line connecting consecutive points at the observed fracture surface in the pattern of a straight line or a curve, and were uniformly dispersed practically macroscopically (in the diameter range of several tens of µm, hereinafter "macroscopically" refers to this diameter range).

### Tenth Example (PP Antifungal Socks)

Five W % of the PP resin masterbatch of the present invention produced in the ninth example, 3 W% of PP masterbatch containing 20 W% of black pigment, and 92 W% of J108M which is a propylene homopolymer manufactured by Prime Polymer Co., Ltd. and has a MI value of 45 were dry-blended and spun by a common method, thereby obtaining multifilament false-twisted yarn (110 dTex/36F) of the present invention, and Spandex monofilament (33 dTex) was used together with the multifilament false-twisted yarn, thereby obtaining covering yarn containing Spandex at a mixing ratio of 10 W%. Double-knit socks of the present invention was fabricated by using 30 W% of the covering yarn as back side yarn and 70 W% of cotton yarn died black as face yarn in a common method.

The antibacterial and antifungal properties of the socks against Staphylococcus aureus and Trichophyton were measured. It was thus found that against Staphylococcus aureus, the antibacterial activity value was 2.8, and the antifungal activity value after 10 times of laundering was 2.7. Against Trichophyton, the antifungal activity value was 3.2, and the antifungal activity value after 10 times of laundering was 2.9. Thus, the socks exhibited excellent antibacterial and antifungal properties. The antibacterial and antifungal properties were measured by using an ATP emission measurement method of Japan Textile Evaluation Technology Council. Japan Textile Evaluation Technology Council approves the antibacterial and antifungal properties of products when the antibacterial activity value is greater than or equal to 2.1 and the antifungal activity value is greater than or equal to 2.0, respectively.

### Comparative Example 2 (Zinc Pyrithione PP Masterbatch)

A pellet was tried to be produced in a manner similar to that in the ninth example, where J108M which is a propylene polymer manufactured by Prime Polymer Co., Ltd. as a base polymer (A) was 80 V%, and the block copolymer (BC) was not used. However, a suspension containing 48 W% of zinc pyrithione dispersed in water flowed out from a nozzle of a twin-screw kneading extruder, so that operation was not possible, and no sample was collected.

### Eleventh Example (Nylon 12 Masterbatch)

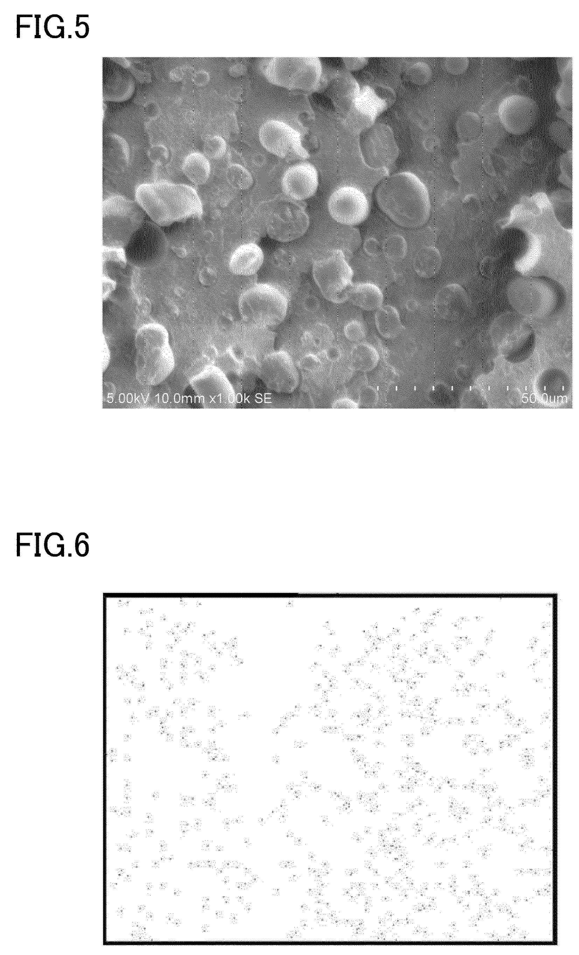

Except that the base polymer (A) was changed to pre-dried "UBE nylon™" 3014U manufactured by Ube Industries, Ltd., the block copolymer (BC) was changed to "Septon 2104" manufactured by Kuraray co., Ltd., the maximum temperature was changed to 190°C, and the die temperature was changed to 180°C, extrusion into the shape of a strand was performed in a manner similar to that in the ninth example, and the strand was quenched in a water bath at 20°C and was then cut, thereby obtaining a resin composition masterbatch pellet of the present invention. Although 10 W% of water relative to the total weight was blended, little water vapor was transpired from the strand extruded from the nozzle, and water was retained in the strand. It was assumed that most of the blended water was quasi-stably encapsulated in the block copolymer (BC). Moreover, it was surprising that the viscosity of the base polymer was not significantly reduced although a large amount of water was blended in the nylon 12 which is the condensation polymer, and strand handling was possible. A region of a fracture surface of the pellet was observed by a SEM (FIG. 5), and Zn in the region of FIG. 5 was mapped by EPMA (FIG. 6). It was thus found that Zinc Omadine™ had an average particle size smaller than or equal to 1 µm. Secondary aggregation of the particles was not found, and at the observed fracture surface, the particles were unevenly distributed on a curve or a straight line connecting consecutive points in the pattern of a straight line or a curve, and were uniformly dispersed in a practical macroscopic view.

### Twelfth Example (Nylon 12 Injection Mold Plate)

The nylon 12 masterbatch produced in the eleventh example was vacuum-dried at 100°C for 12 hours to obtain a substance including 15 W% of nylon 12, and the substance was injection-molded by a common method at 200°C into a step plate, thereby producing an injection-molded plate of the present invention. This plate was fractured to obtain powder which passes through a 20-mesh. Then, the antifungal property of the powder against black mold was measured. It was thus found that the antifungal activity value was 3.2, and thus the powder exhibited excellent antibacterial and antifungal properties. The antifungal properties were measured by using an ATP emission measurement method of Japan Textile Evaluation Technology Council.

### Thirteenth Example (Nylon 6 Masterbatch)

Except that the base polymer (A) was changed to pre-dried "UBE nylon™" 1022B manufactured by Ube Industries, Ltd., the maximum temperature was changed to 230°C, and the die temperature was changed to 220°C, extrusion into the shape of a strand was performed in a manner similar to that in the ninth example, and the strand was quenched in a water bath at a temperature of 20°C and then was cut, thereby obtaining a resin composition masterbatch pellet of the present invention. Although 10 W% of water relative to the total weight was blended, little water vapor was transpired from the strand extruded from the nozzle, and water was retained in the strand. It was assumed that most of the blended water was quasi-stably encapsulated in the block copolymer (BC). Moreover, it was surprising that the viscosity of the base polymer was not significantly reduced although a large amount of water was blended in the nylon 6 which is the condensation polymer, and strand handling was possible. A region of a fracture surface of the pellet was observed by a SEM, and Zn in the region was mapped by EPMA. It was thus found that Zinc Omadine™ had an average particle size smaller than or equal to 1 µm. Secondary aggregation of the particles was not found, and at the observed fracture surface, the particles were locally unevenly distributed on a curve or straight line connecting consecutive points in the pattern of a straight line or a curve, and were uniformly dispersed in a practical macroscopic view.

### Fourteenth Example (PBT Masterbatch)

Except that the base polymer (A) was changed to 84 W% of pre-dried "Duranex™" 2002 manufactured by Polyplastics Co., Ltd., Zinc Omadine™ which is a fungicide and a suspension containing 48 W% of zinc pyrithione dispersed in water and in which 90% of zinc pyrithione particles have a particle size smaller than or equal to 1 µm was fed by a plunger pump at a constant rate of W% by side-injection, the maximum temperature was changed to 230°C, and the die temperature was changed to 220°C, extrusion into the shape of a strand was performed in a manner similar to that in the ninth example, and the strand was quenched in a water bath at a temperature of 20°C, and then was cut, thereby obtaining a resin composition masterbatch pellet of the present invention. Although 8 W% of water relative to the total weight was blended, little water vapor was transpired from the strand extruded from the nozzle, and water was retained in the strand. It was assumed that most of the blended water was quasi-stably encapsulated in the block copolymer (BC). Moreover, it was surprising that the viscosity of the base polymer was not significantly reduced although a large amount of water was blended in the PBT which is a condensation polymer, and strand handling was possible. A fracture surface of the pellet was observed by a SEM, and Zn in the fracture surface was mapped by EPMA. It was thus found that Zinc Omadine™ had an average particle size smaller than or equal to 1 µm. Secondary aggregation of the particles was not found, and at the observed fracture surface, the particles were locally unevenly distributed on a curve or a straight line connecting consecutive points in the pattern of a straight line or a curve, and were uniformly dispersed in a practical macroscopic view.

### Fifteenth Example (Cast Film for Laminating PBT Steel Plate)

Five W% of the antifungal PBT masterbatch produced in the fourteenth example, 3 W% of PBT masterbatch containing 30 W% of titanium trioxide, and 92% of "DURANEX™" 2002 manufactured by Polyplastics Co., Ltd. were pre-dried, and then dry-blended, followed by extrusion by a common method by a T-die extruder to have a thickness of 80 µm, thereby obtaining an unstretched cast film of the present invention for laminating steel plates. The film is freeze-fractured in a liquid nitrogen thereby obtaining powder. Then, the antifungal property of the powder against black mold was measured. It was thus found that the antifungal activity value was 3.2, and thus the powder exhibited the antifungal property. The antifungal properties were measured by using an ATP emission measurement method of Japan Textile Evaluation Technology Council.

### BRIEF DESCRIPTION OF THE DRAWINGS

FIG. 1 is a SEM image of a fracture surface orthogonal to a pellet extrusion direction. (First Example)
FIG. 2 is a view illustrating distribution of particles containing zinc. (First Example)
FIG. 3 is a SEM image of a fracture surface at a cross section orthogonal to a pellet extrusion direction. (Ninth Example)
FIG. 4 shows mapping of zinc contained in a pellet. (Ninth Example)
FIG. 5 is a SEM image of a fracture surface at a cross section orthogonal to a pellet extrusion direction. (Eleventh Example)
FIG. 6 shows mapping of zinc contained in a pellet. (Eleventh Example)

## Claims

1. A thermoplastic resin composition comprising:
a plurality of kinds of thermoplastic resins; and
nanoparticles having an average particle size larger than or equal to 1 nm and smaller than or equal to 1 µm, wherein
the nanoparticles are in a membrane-like space sandwiched by the thermoplastic resins on both sides of the membrane-like space, and
the thermoplastic resin composition has an interconnected structure in which both surfaces of the membrane-like space extend three-dimensionally and continuously parallel to each other.

2. The thermoplastic resin composition of claim 1 wherein
the thermoplastic resins are
a thermoplastic base polymer or base polyblend (A), and
a thermoplastic base polymer or base polyblend (B) having no compatibility with (A), and
(A) and (B) have an interconnected structure formed by an interface therebetween.

3. The thermoplastic resin composition of claim 2, wherein
in a molten state, a volume of (A) is greater than or equal to 95% and less than or equal to 105% of a volume of (B).

4. The thermoplastic resin composition of claim 1, wherein
the thermoplastic resins are
a thermoplastic base polymer or base polyblend (A), and
a block copolymer (BC) including a block (B1) having compatibility with (A) and a block (B2) having no compatibility with (A).

5. The thermoplastic resin composition of claim 4, wherein
the block copolymer (BC) includes a polyolefin block as the block (B1) and a polystyrene block as the block (B2) and is at least one selected from a polystyrene-poly(ethylene/propylene) block copolymer, a polystyrene-poly(ethylene/butylene) block copolymer, a polystyrene-poly(ethylene/propylene)-polystyrene block copolymer, a polystyrene-poly(ethylene/butylene)-polystyrene block copolymer, and a polystyrene-poly(ethylene-ethylene/propylene)-polystyrene block copolymer.

6. The thermoplastic resin composition of at least any one of claims 1-5, wherein
the nanoparticles include at least one of metal, metal oxide, ceramic, or an organic substance.

7. The thermoplastic resin composition of claim 6, wherein
the organic substance is zinc pyrithione, persimmon tannin, or tea extractable matter.

8. A thermoplastic resin composition comprising:
nanoparticles having an average particle size from 1 µm to 1 nm, wherein
the nanoparticles are unevenly distributed locally in the pattern of a curve or a straight line connecting consecutive points at a fracture surface of the thermoplastic resin composition and are macroscopically uniformly dispersed.

9. The thermoplastic resin composition of claim 8, further comprising:
a polymer composition which includes a thermoplastic base polymer or base polyblend (A), a thermoplastic base polymer or base polyblend (B) having no compatibility with (A), and fluid (C) included as a nanoparticle colloid having compatibility with neither (A) nor (B) and containing nanoparticles uniformly dispersed at a temperature lower than or equal to a thermal decomposition temperature of (A) or (B), and in which three-dimensional continuous parallel interfaces are formed by interfaces between three layers made of (A), (B), and (C), wherein
the thermoplastic resin composition is obtained by removing a dispersion medium of (C) in the polymer composition by evaporation.

10. The thermoplastic resin composition of claim 8, which is a blend of a thermoplastic base polymer or base polyblend (A), a block copolymer (BC) including a block (B1) having compatibility with (A) and a block (B2) having no compatibility with (A), and fluid (C) included as a nanoparticle colloid containing nanoparticles uniformly dispersed at a temperature lower than or equal to a thermal decomposition temperature of (A) or (BC), wherein
a dispersion medium of (C) is removed from the blend by evaporation.

11. The thermoplastic resin composition of claim 10, wherein
the block copolymer (BC) includes a polyolefin block as the block (B1) and a polystyrene block as the block (B2) and is at least one selected from a polystyrene-poly(ethylene/propylene) block copolymer, a polystyrene-poly(ethylene/butylene) block copolymer, a polystyrene-poly(ethylene/propylene)-polystyrene block copolymer, a polystyrene-poly(ethylene/butylene)-polystyrene block copolymer, and a polystyrene-poly(ethylene -ethylene/propylene) -polystyrene block copolymer.

12. The thermoplastic resin composition of claims 9 to 11, wherein
(C) is at least one selected from an inorganic colloid such as colloidal silica, colloidal titanium oxide, colloidal bentonites, colloidal platinum, colloidal gold, colloidal silver, and colloidal zinc, and an organic colloid such as colloidal zinc pyrithione, persimmon tannin, and tea extractable matter.

13. The thermoplastic resin composition of claims 9 to 12, wherein
(C) is a water colloid.

14. A molded product which is formed of the thermoplastic resin composition (D) of claims 8 to 13, or in which the thermoplastic resin composition (D) is diluted and dispersed.

15. The molded product of claim 14, which is an extrusion molded product, an injection molded product, or a blow molded product such as a film, a sheet, and a fiber.

## Patentansprüche

1. Thermoplastische Harzzusammensetzung, umfassend:
mehrere Arten von thermoplastischen Harzen; und
Nanoteilchen mit einer durchschnittlichen Teilchengröße von größer als oder gleich 1 nm und kleiner als oder gleich 1 µm, wobei
die Nanoteilchen in einem membranähnlichen Raum von den thermoplastischen Harzen auf beiden Seiten des membranähnlichen Raums zusammengepresst werden, und
die thermoplastische Harzzusammensetzung eine miteinander verbundene Struktur aufweist, in der beide Oberflächen des membranähnlichen Raums dreidimensional und kontinuierlich parallel zueinander verlaufen.

2. Thermoplastische Harzzusammensetzung nach Anspruch 1, wobei
die thermoplastischen Harze Folgendes sind
ein thermoplastisches Basispolymer oder eine Basispolymermischung (A) und
ein thermoplastisches Basispolymer oder eine Basispolymermischung (B), das nicht mit (A) kompatibel ist, und
(A) und (B) eine miteinander verbundene Struktur aufweisen, die durch eine Grenzfläche dazwischen ausgebildet ist.

3. Thermoplastische Harzzusammensetzung nach Anspruch 2, wobei
in einem geschmolzenen Zustand ein Volumen von (A) größer als oder gleich 95 % und kleiner als oder gleich 105 % eines Volumens von (B) ist.

4. Thermoplastische Harzzusammensetzung nach Anspruch 1, wobei
die thermoplastischen Harze Folgendes sind
ein thermoplastisches Basispolymer oder eine Basispolymermischung (A) und
ein Blockcopolymer (BC), das einen Block (B1), der mit (A) kompatibel ist, und einen Block (B2) aufweist, der mit (A) nicht kompatibel ist.

5. Thermoplastische Harzzusammensetzung nach Anspruch 4, wobei
das Blockcopolymer (BC) einen Polyolefin-Block als den Block (B1) und einen Polystyrol-Block als den Block (B2) aufweist und mindestens eines ist, das ausgewählt ist aus einem Polystyrol-Poly(ethylen/propylen)-Blockcopolymer, einem Polystyrol-Poly(ethylen/butylen)-Blockcopolymer, einem Polystyrol-Poly(ethylen/propylen)-Polystyrol-Blockcopolymer, einem Polystyrol-Poly(ethylen/butylen)-Polystyrol-Blockcopolymer und einem Polystyrol-Poly(ethylen-ethylen/propylen)-Polystyrol-Blockcopolymer.

6. Thermoplastische Harzzusammensetzung nach mindestens einem der Ansprüche 1 bis 5, wobei
die Nanoteilchen mindestens eines von Metall, Metalloxid, Keramik oder einem organischen Stoff enthalten.

7. Thermoplastische Harzzusammensetzung nach Anspruch 6, wobei
der organische Stoff Zinkpyrithion, Persimmonentannin oder aus Tee extrahierbarer Stoff ist.

8. Thermoplastische Harzzusammensetzung, umfassend:
Nanoteilchen mit einer durchschnittlichen Teilchengröße von 1 µm bis 1 nm, wobei
die Nanoteilchen lokal in dem Muster einer Kurve oder einer geraden Linie, die aufeinanderfolgende Punkte an einer Bruchoberfläche der thermoplastischen Harzzusammensetzung verbindet, ungleichmäßig verteilt sind und makroskopisch gleichförmig dispergiert sind.

9. Thermoplastische Harzzusammensetzung nach Anspruch 8, ferner umfassend:
eine Polymerzusammensetzung, die ein thermoplastisches Basispolymer oder eine Basispolymermischung (A), ein thermoplastisches Basispolymer oder eine Basispolymermischung (B), die mit (A) nicht kompatibel ist, und ein Fluid (C) aufweist, das als ein Nanoteilchenkolloid enthalten ist und weder mit (A) noch mit (B) kompatibel ist und Nanoteilchen enthält, die bei einer Temperatur, die geringer als oder gleich einer thermischen Zersetzungstemperatur von (A) oder (B) ist, gleichmäßig dispergiert sind, und in der dreidimensionale kontinuierliche parallele Grenzflächen durch Grenzflächen zwischen drei Schichten ausgebildet sind, die aus (A), (B) und (C) hergestellt sind, wobei
die thermoplastische Harzzusammensetzung durch Entfernen eines Dispersionsmediums von (C) in der Polymerzusammensetzung durch Verdampfung erhalten wird.

10. Thermoplastische Harzzusammensetzung nach Anspruch 8, die eine Mischung eines thermoplastischen Basispolymers oder einer Basispolymermischung (A), eines Blockcopolymers (BC), das einen Block (B1), der mit (A) kompatibel ist, und einen Block (B2) aufweist, der mit (A) nicht kompatibel ist, und eines Fluids (C) ist, das als ein Nanoteilchenkolloid enthalten ist, das Nanoteilchen enthält, die bei einer Temperatur, die geringer als oder gleich einer thermischen Zersetzungstemperatur von (A) oder (BC) ist, gleichmäßig dispergiert sind, wobei
ein Dispersionsmedium von (C) aus der Mischung durch Verdampfung entfernt wird.

11. Thermoplastische Harzzusammensetzung nach Anspruch 10, wobei
das Blockcopolymer (BC) einen Polyolefin-Block als den Block (B1) und einen Polystyrol-Block als den Block (B2) aufweist und mindestens eines ist, das ausgewählt ist aus einem Polystyrol-Poly(ethylen/propylen)-Blockcopolymer, einem Polystyrol-Poly(ethylen/butylen)-Blockcopolymer, einem Polystyrol-Poly(ethylen/propylen)-Polystyrol-Blockcopolymer, einem Polystyrol-Poly(ethylen/butylen)-Polystyrol-Blockcopolymer und einem Polystyrol-Poly(ethylen-ethylen/propylen)-Polystyrol-Blockcopolymer.

12. Thermoplastische Harzzusammensetzung nach Anspruch 9 bis 11, wobei
(C) mindestens eines ist, das ausgewählt ist aus kolloidalem Siliciumdioxid, kolloidalem Titanoxid, kolloidalen Bentoniten, kolloidalem Platin, kolloidalem Gold, kolloidalem Silber und kolloidalem Zink und einem organischen Kolloid wie Zinkpyrithion, Persimmonentannin und aus Tee extrahierbarem Stoff.

13. Thermoplastische Harzzusammensetzung nach Anspruch 9 bis 12, wobei
(C) ein Wasserkolloid ist.

14. Geformtes Produkt, das aus der thermoplastischen Harzzusammensetzung (D) nach Anspruch 8 bis 13 gebildet ist oder in dem die thermoplastische Harzzusammensetzung (D) verdünnt oder dispergiert ist.

15. Geformtes Produkt nach Anspruch 14, das ein extrusionsgeformtes Produkt, ein spritzgegossenes Produkt oder ein blasgeformtes Produkt wie ein Film, eine Folie und eine Faser ist.

## Revendications

1. Composition de résine thermoplastique comprenant :
une pluralité de types de résines thermoplastiques ; et
des nanoparticules ayant une dimension moyenne de particules supérieure ou égale à 1 nm et inférieure ou égale à 1 µm, où
les nanoparticules se trouvent dans un espace de type membrane pris en tenaille par les résines thermoplastiques sur les deux côtés de l'espace de type membrane, et
la composition de résine thermoplastique a une structure interconnectée dans laquelle les deux surfaces de l'espace de type membrane s'étendent en trois dimensions et de manière continue parallèlement l'une à l'autre.

2. Composition de résine thermoplastique de la revendication 1, dans laquelle
les résines thermoplastiques sont
un mélange polymère de base ou un polymère de base thermoplastique (A), et
un mélange polymère de base ou un polymère de base thermoplastique (B) ne présentant pas de compatibilité avec (A), et
(A) et (B) ont une structure interconnectée formée par une interface entre eux.

3. Composition de résine thermoplastique de la revendication 2, dans laquelle
dans un état fondu, un volume de (A) est supérieur ou égal à 95% et inférieur ou égal à 105% d'un volume de (B).

4. Composition de résine thermoplastique de la revendication 1, dans laquelle
les résines thermoplastiques sont
un mélange polymère de base ou un polymère de base thermoplastique (A), et
un copolymère à blocs (BC) comportant un bloc (B1) présentant une compatibilité avec (A) et un bloc (B2) ne présentant pas de compatibilité avec (A).

5. Composition de résine thermoplastique de la revendication 4, dans laquelle
le copolymère à blocs (BC) comporte un bloc polyoléfine comme étant le bloc (B1) et un bloc polystyrène comme étant le bloc (B2) et est au moins un copolymère choisi parmi un copolymère à blocs de polystyrène-poly(éthylène/propylène), un copolymère à bocs de polystyrène-poly(éthylène/butylène), un copolymère à blocs de polystyrène-poly(éthylène/propylène)-polystyrène, un copolymère à blocs de polystyrène-poly(éthylène/butylène)-polystyrène, et un copolymère à blocs de polystyrène-poly(éthylène-éthylène/propylène)-polystyrène.

6. Composition de résine thermoplastique d'au moins l'une quelconque des revendications 1 à 5, dans laquelle
les nanoparticules comportent au moins l'un(e) d'un métal, d'un oxyde métallique, d'une céramique ou d'une substance organique.

7. Composition de résine thermoplastique de la revendication 6, dans laquelle
la substance organique est la pyrithione de zinc, le tanin de kaki, ou des matières extractibles de thé.

8. Composition de résine thermoplastique comprenant :
des nanoparticules ayant une dimension moyenne de particules allant de 1 µm à 1 nm, où les nanoparticules sont réparties de manière inégale localement selon le motif d'une courbe ou d'une ligne droite reliant des points consécutifs au niveau d'une surface de fracture de la composition de résine thermoplastique et sont macroscopiquement dispersées de manière uniforme.

9. Composition de résine thermoplastique de la revendication 8, comprenant en outre :
une composition polymère qui comporte un mélange polymère de base ou un polymère de base thermoplastique (A), un mélange polymère de base ou un polymère de base thermoplastique (B) ne présentant pas de compatibilité avec (A) et un fluide (C) inclus en tant que colloïde de nanoparticules ne présentant pas de compatibilité ni avec (A) ni avec (B) et contenant des nanoparticules dispersées de manière uniforme à une température inférieure ou égale à une température de décomposition thermique de (A) ou (B), et où des interfaces parallèles continues en trois dimensions sont formées par des interfaces entre trois couches constituées de (A), (B) et de (C), où
la composition de résine thermoplastique est obtenue par élimination d'un milieu de dispersion de (C) dans la composition polymère par évaporation.

10. Composition de résine thermoplastique de la revendication 8, qui est un mélange d'un mélange polymère de base ou d'un polymère de base thermoplastique (A), d'un copolymère à blocs (BC) comportant un bloc (B1) présentant une compatibilité avec (A) et un bloc (B2) ne présentant pas de compatibilité avec (A), et d'un fluide (C) inclus en tant que colloïde de nanoparticules contenant des nanoparticules dispersées de manière uniforme à une température inférieure ou égale à une température de décomposition thermique de (A) ou (BC), où
un milieu de dispersion de (C) est éliminé du mélange par évaporation.

11. Composition de résine thermoplastique de la revendication 10, dans laquelle
le copolymère à blocs (BC) comporte un bloc polyoléfine comme étant le bloc (B1) et un bloc polystyrène comme étant le bloc (B2) et est au moins un copolymère choisi parmi un copolymère à blocs de polystyrène-poly(éthylène/propylène), un copolymère à blocs de polystyrène-poly(éthylène/butylène), un copolymère à blocs de polystyrène-poly(éthylène/propylène)-polystyrène, un copolymère à blocs de polystyrène-poly(éthylène/butylène)-polystyrène, et un copolymère à blocs de polystyrène-poly(éthylène-éthylène/propylène)-polystyrène.

12. Composition de résine thermoplastique des revendications 9 à 11, dans laquelle
(C) est au moins un élément choisi parmi un colloïde inorganique tel que la silice colloïdale, l'oxyde de titane colloïdal, les bentonites colloïdales, le platine colloïdal, l'or colloïdal, l'argent colloïdal, et le zinc colloïdal, et un colloïde organique tel que la pyrithione de zinc colloïdale, le tanin de kaki et des matières extractibles de thé.

13. Composition de résine thermoplastique des revendications 9 à 12, dans laquelle
(C) est un colloïde aqueux.

14. Produit moulé qui est formé de la composition de résine thermoplastique (D) des revendications 8 à 13, ou dans lequel la composition de résine thermoplastique (D) est diluée et dispersée.

15. Produit moulé de la revendication 14, qui est un produit moulé par extrusion, un produit moulé par injection, ou un produit moulé par soufflage tel qu'un film, une feuille, et une fibre.
